# FASCICULE DE BREVET EUROPEEN

(11) **EP 2 583 120 B1**
(45) Date de publication et mention de la délivrance du brevet: **12.07.2017**
(21) Numéro de dépôt: 11725784.0
(22) Date de dépôt: 20.06.2011
(51) Int. Cl.: G01T 7/00

(54) **DISPOSITIF DE SUIVI DE MATIÈRE NUCLEAIRE PLACÉE DANS UNE BOÎTE À GANTS**
VORRICHTUNG ZUR ÜBERWACHUNG EINES KERNMATERIALS IN EINER HANDSCHUHBOX
DEVICE FOR MONITORING A NUCLEAR MATERIAL PLACED IN A GLOVE BOX

(30) Priorité: 21.06.2010 FR 1054914
(43) Date de publication de la demande: 24.04.2013
(73) Titulaire: Commissariat à l'Énergie Atomique et aux Énergies Alternatives, 75015 Paris (FR)
(72) Inventeur: BRENNEIS, Christophe, F-30290 Saint Victor La Coste (FR); DUCROS, Christian, F-30130 Pont Saint Esprit (FR); LAMADIE, Fabrice, F-30330 Connaux (FR); GIRONES, Philippe, F-30200 Venejan (FR)
(74) Mandataire: Ilgart, Jean-Christophe
(86) Numéro de dépôt international: PCT/EP2011/060238
(87) Numéro de publication internationale: WO 2011/161057

(56) Documents cités:
- EP-A2- 1 218 774

## Description

### DOMAINE TECHNIQUE

La présente invention est relative au suivi de matière nucléaire. Dans ce contexte, l'expression « matière nucléaire » signifie matière contenant de l'uranium, du plutonium ou du thorium à des taux de concentration significatifs.

Ces matières nucléaires sont manipulées dans un grand nombre de laboratoires ou usines du cycle du combustible nucléaire. Les pratiques industrielles sont encadrées par des contraintes de sûreté pour assurer en particulier la maîtrise du risque de criticité et la maîtrise de la prolifération de la matière nucléaire comme énoncé dans le document «RÈGLES FONDAMENTALES DE SÛRETÉ RELATIVES AUX INSTALLATIONS NUCLÉAIRES DE BASE AUTRES QUE LES RÉACTEURS NUCLÉAIRES RFS N°1.3.C DU 18 OCTOBRE 1984».

### ÉTAT DE LA TECHNIQUE ANTÉRIEURE

L'exploitation d'installations industrielles ou de recherche contenant de la matière nucléaire et plus particulièrement fissible, c'est-à-dire susceptible de subir une fission nucléaire, est organisée en postes de travail. Le poste de travail correspond à une partie de l'installation dont le contour est matérialisé et à l'intérieur duquel se trouve une masse limitée de matière nucléaire. Dans la présente invention le poste de travail est une boîte à gants. La maîtrise de la masse de matière nucléaire contenue dans un poste de travail est un des modes de contrôle du risque de criticité. Ce mode de contrôle est assuré à l'aide de bilans de masse élaborés, par des pesées, en entrée et en sortie du poste de travail. Pour éviter une accumulation excessive de matière nucléaire, des examens réguliers du poste de travail et si nécessaire des nettoyages sont effectués. Ce mode de contrôle est simple à mettre en oeuvre et relativement fiable. On complète généralement ce mode de contrôle par des mesures nucléaires non destructives passives telles que des mesures de spectrométrie gamma ou des comptages neutroniques ou gamma. On utilise des systèmes mobiles non industriels nécessitant une installation à l'intérieur de la boîte à gants et entraînant une décontamination des systèmes en fin d'opération. EP 1 218 774 A2 décrit un dispositif mécanique de support et de fixation d'une sonde de détection de rayonnement ionisant. Ce détecteur comporte un porte-collimateur pour définir un champ d'observation de la sonde de détection. Ce collimateur est mobile. Cependant ces techniques d'analyse sont complexes à mettre en oeuvre, notamment car il n'existe pas de système standard de positionnement, chaque mesure nécessite une étude spécifique et l'interprétation des mesures exige un traitement a posteriori complexe, ce qui ne permet pas de bénéficier du résultat des mesures en temps réel.

### EXPOSÉ DE L'INVENTION

La présente invention a justement comme but de proposer un dispositif mécanique de support et de fixation d'au moins une sonde de détection de rayonnement ionisant à l'intérieur d'une boîte à gants de manière à pouvoir faire aisément et simplement, in situ, du suivi de matière nucléaire qui produit ce rayonnement ionisant, dans la boîte à gants. Un but de l'invention est de pouvoir faire le suivi de la matière nucléaire en temps réel.

Un autre but de l'invention est de pouvoir placer, dans la boîte à gants, une ou plusieurs sondes de détection à des endroits prédéterminés.

Encore un autre but de l'invention est de pouvoir faire plusieurs mesures avec des champs d'observation différents.

Pour y parvenir, la présente invention propose un dispositif mécanique de support et de fixation d'au moins une sonde de détection de rayonnement ionisant qui intègre, d'une part, un porte-collimateur et, d'autre part, un dispositif de fixation à un rond de gant de boîte à gants.

Plus précisément la présente invention est un dispositif mécanique de support et de fixation d'au moins une sonde de détection de rayonnement ionisant qui comporte, pour chaque sonde de détection de rayonnement ionisant, un porte-sonde se terminant par un porte-collimateur apte à supporter un collimateur destiné à délimiter un champ d'observation de la sonde de détection, et en outre un dispositif de fixation destiné à être fixé sur un rond de gant de boîte à gants, le ou chaque porte-sonde coopérant avec ledit dispositif de fixation.

Afin de pouvoir aisément changer le collimateur, de manière à donner à la sonde un champ d'observation ajustable, le dispositif de support peut comporter, en outre, des moyens de fixation d'un collimateur au porte-collimateur de type emmanchement cylindre-cylindre et au moins un poussoir à billes destiné à venir en butée contre une encoche portée, soit par le porte-collimateur, soit par le collimateur, pour une immobilisation en rotation et en translation du collimateur par rapport au porte-collimateur, le collimateur étant ainsi interchangeable.

Pour pouvoir positionner avec précision la sonde de détection de rayonnement ionisant dans la boîte à gants, il est préférable que le porte-collimateur soit pourvu de moyens de blocage de la sonde de détection de rayonnement ionisant en translation et en rotation par rapport au porte-collimateur.

Le dispositif de fixation peut comporter une partie centrale au travers de laquelle passe le porte-sonde, cette partie centrale étant bordée par une bride pourvue de moyens de fixation devant coopérer avec des moyens de fixation conjugués portés par le rond de gant de la boîte à gants, ces moyens de fixation étant de type à baïonnette ou à griffes. Il est ainsi très aisé de mettre en place le dispositif mécanique de support et de fixation de la sonde de détection ionisant dans la boîte à gants.

Pour pouvoir ajuster l'enfoncement de la sonde de détection de rayonnement ionisant dans la boîte à gants et l'orientation angulaire de son champ d'observation, le dispositif de fixation peut être équipé de moyens de blocage en translation et en rotation du porte-sonde par rapport au dispositif de fixation.

Toujours dans le but de maîtriser l'orientation angulaire du champ d'observation de la sonde de détection de rayonnement ionisant, le dispositif de fixation peut comporter des moyens de blocage en rotation de la partie centrale par rapport à la bride.

De manière à ce que les réglages de la position angulaire du collimateur par rapport au porte-sonde et du porte-sonde par rapport au dispositif de fixation puissent être très précis, il est possible d'équiper le porte-collimateur et/ou le dispositif de fixation d'un niveau à bulle.

La présente invention concerne également un dispositif de suivi de matière nucléaire placée dans une boîte à gants. Il comporte un dispositif mécanique de support et de fixation ainsi caractérisé et au moins une sonde de détection de rayonnement ionisant placée dans le porte-sonde, cette sonde ayant un détecteur sensible au rayonnement ionisant qui émerge du porte-collimateur, et un système de traitement et d'affichage d'un signal délivré par la sonde de détection de rayonnement ionisant. Le détecteur est logé dans un collimateur, lorsque le collimateur est fixé au porte-collimateur.

Le détecteur peut être avantageusement en CdTe ou en CdZnTe, ces matériaux étant sensibles aux rayonnements ionisants.

La sonde est de préférence une sonde de spectrométrie X et/ou gamma, la spectrométrie X concernant les énergies les plus faibles, plus particulièrement inférieures à 120 keV.

La présente invention concerne également une boîte à gants équipée d'un dispositif de suivi de matière nucléaire ainsi caractérisé.

La présente invention concerne également l'utilisation d'un dispositif de suivi de matière nucléaire ainsi caractérisé, pour identifier un ou plusieurs radioéléments présents dans la matière nucléaire suivie.

La présente invention concerne également l'utilisation d'un dispositif de suivi de matière nucléaire ainsi caractérisé, pour déterminer l'activité de la matière nucléaire suivie.

La présente invention concerne également l'utilisation d'un dispositif de suivi de matière nucléaire ainsi caractérisé, pour estimer l'évolution du facteur de rétention ou de décontamination de la matière nucléaire suivie.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
les figures 1A, 1B montrent en trois dimensions un exemple de dispositif de suivi de matière nucléaire avec deux sondes de détection de rayonnement ionisant objet de l'invention, utilisant un dispositif mécanique de support et de fixation des sondes dont le dispositif de fixation est à baïonnette ;
la figure 2A montre le porte-collimateur d'un exemple de dispositif mécanique de support et de fixation d'une sonde de détection de rayonnement ionisant selon l'invention, le porte-collimateur étant volontairement dépourvu de collimateur ;
les figures 2B, 2C montrent un exemple de porte-collimateur et de collimateur interchangeable de dispositif mécanique de support et de fixation d'au moins une sonde de détection de rayonnement ionisant selon l'invention ;
la figure 3 montre une boîte à gants dont un rond de gant est équipé d'un dispositif de suivi de matière nucléaire selon l'invention à deux sondes de détection de rayonnement ionisant, chacune associée à un collimateur ;
les figures 4A1, 4A2, 4B à 4D sont différentes vues montrant des détails de l'accouplement entre le rond de gant de la boîte à gants et le dispositif de fixation du dispositif mécanique de support et de fixation, le dispositif de fixation étant à griffes ;
la figure 5 est un graphique illustrant le rendement intrinsèque en fonction de l'énergie de deux détecteurs de sondes de détection de rayonnement ionisant dont le volume est de 60 mm³ ou de 1 mm³.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Sur ces figures, des structures bien connues ne sont pas représentées en détail afin de ne pas alourdir inutilement la description.

### EXPOSÉ DÉTAILLÉ DE MODES DE RÉALISATION PARTICULIERS

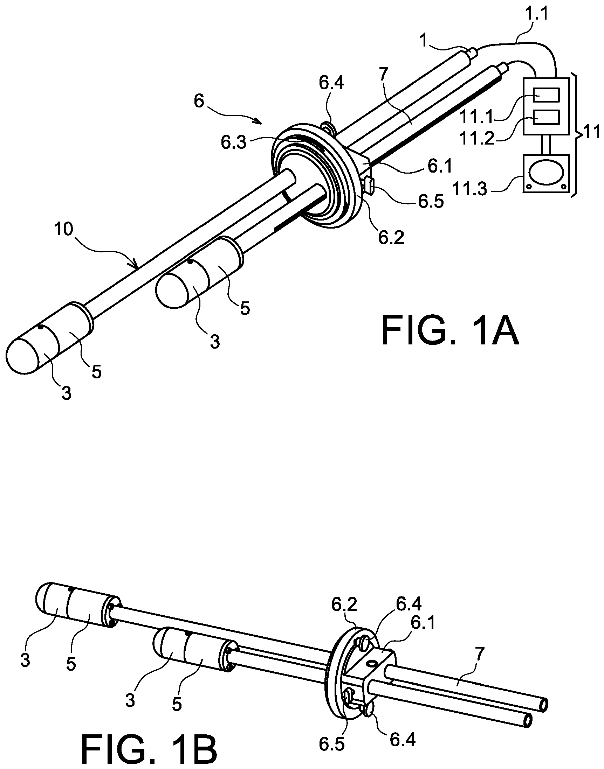

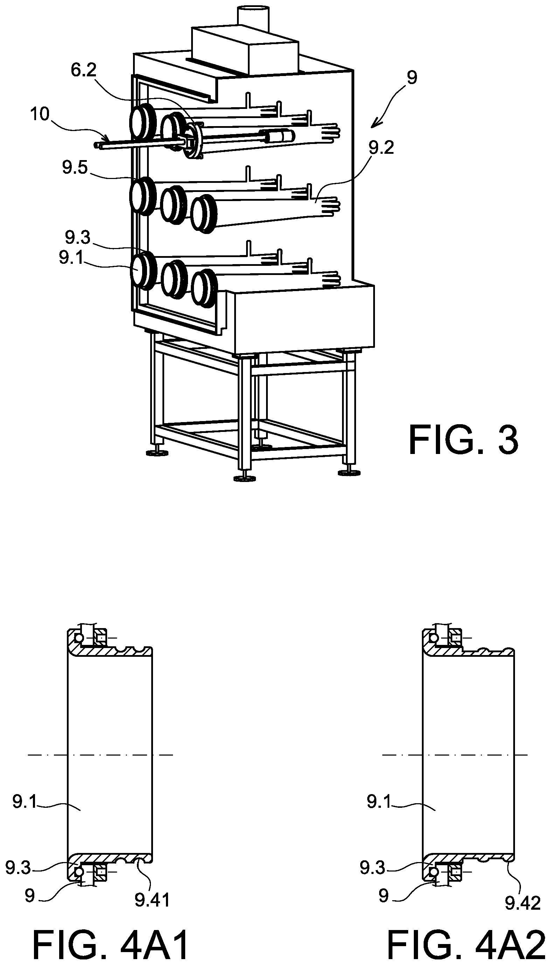

On va se référer aux figures 1A, 1B qui montrent, en trois dimensions, deux vues d'un dispositif de suivi de matière nucléaire objet de l'invention. Le dispositif de suivi de matière nucléaire, objet de l'invention, est destiné à effectuer un suivi de matière nucléaire placée dans une boîte à gants 9. La boîte à gants 9 n'est visible que sur la figure 3.

Une boîte à gants 9 est une enceinte étanche munie d'au moins une paire d'ouvertures 9.1 (type ronds de gants), chacune des ouvertures 9.1 étant équipée, de manière étanche, de gants de manipulation 9.2, permettant à des opérateurs d'intervenir dans la boîte à gants sans risque de contamination. Les gants peuvent être remplacés par des manches permettant l'entrée ou la sortie de matériels ou de déchets. Dans ce cas, ce sont les manches qui sont fixées de manière étanche aux ouvertures. La figure 3 ne montre que des gants mais on peut bien imaginer que les manches correspondraient à des gants avec des doigts coupés.

Le dispositif de suivi de matière nucléaire comporte d'une part au moins une sonde de détection de rayonnement ionisant 1 et d'autre part un dispositif mécanique 10 de support et de fixation de la sonde de détection de rayonnement ionisant 1 dans l'ouverture 9.1 de la boîte à gants 9. La sonde de détection de rayonnement ionisant 1 est bien entendue reliée à système de traitement et d'affichage 11 d'un signal délivré par la sonde de détection de rayonnement ionisant 1. La sonde de détection de rayonnement ionisant 1 comporte un détecteur 2 sensible au rayonnement ionisant. Sur les figures 1A, 1B la sonde de détection 1 n'est visible que partiellement.

On utilise de préférence une sonde de spectrométrie X et/ou gamma. La spectrométrie X concerne des énergies plus faibles que la spectrométrie gamma, plus particulièrement inférieures à 120 keV. Dans la suite de la description, lorsque l'expression sonde de détection est employée, cela signifie qu'il peut s'agir de n'importe quel type de sonde de détection de rayonnement ionisant.

Une sonde de spectrométrie X et/ou gamma 1 permet de connaître le spectre, c'est-à-dire la distribution en énergie des rayonnements X et/ou gamma émis par la matière nucléaire. Le spectre obtenu traduit les différentes interactions élémentaires du rayonnement X et/ou gamma dans le détecteur 2 dont est munie la sonde de spectrométrie X et/ou gamma 1.

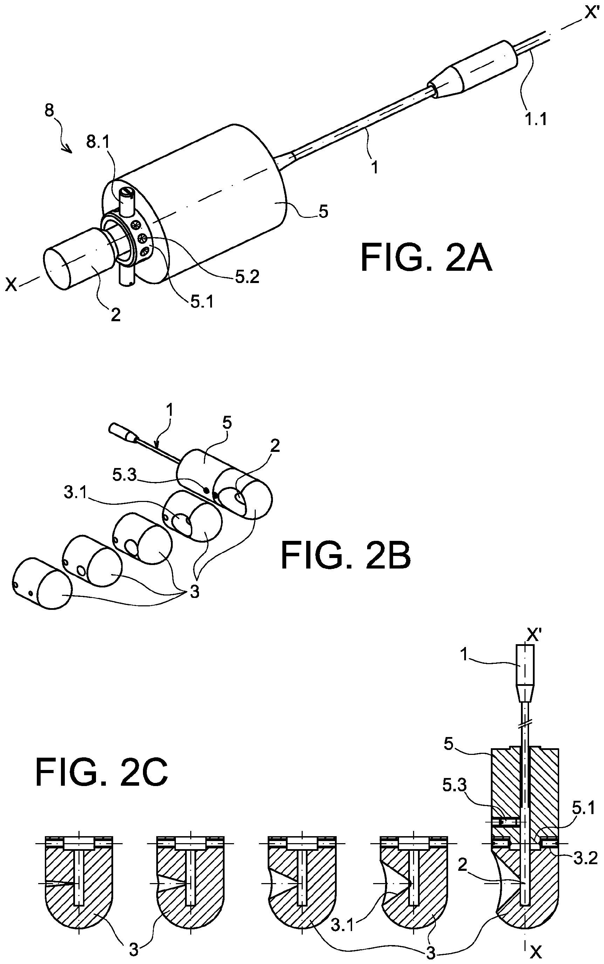

On se réfère en outre aux figures 2A, 2B, 2C. Cette sonde de détection de rayonnement ionisant 1 est de forme allongée et s'étend selon un axe xx'. Le détecteur 2 sensible au rayonnement ionisant provenant de la matière nucléaire est placé à une extrémité de la sonde. Ce détecteur 2 transforme le rayonnement ionisant reçu en signal électrique. Des conducteurs électriques 1.1, destinés à véhiculer les signaux électriques pour qu'ils puissent être traités par le système de traitement et d'affichage 11, sont accessibles à l'autre extrémité de la sonde 1.

Ce détecteur 2 peut être réalisé par exemple à base de matériaux semi-conducteurs tels que le CdTe ou le CdZnTe, ces matériaux étant sensibles aux rayonnements X et gamma. Ce détecteur 2 peut prendre la forme d'un cylindre de révolution.

Cette sonde de détection 1 est de préférence collimatée. Le collimateur 3 est destiné à limiter la partie de l'espace vue par le détecteur 2, c'est-à-dire son champ d'observation. Le collimateur 3 est caractérisé par la valeur de l'angle solide délimitant le champ d'observation du détecteur 2 de la sonde de détection 1. Le volume du détecteur 2 peut varier, toutefois un même collimateur peut être utilisé. Ce volume peut par exemple être compris entre 1 mm³ et 1500 mm³.

La sonde de détection 1 est destinée à être utilisée avec le dispositif mécanique de support et de fixation 10 dans une boîte à gants également objet de l'invention. Le dispositif mécanique de support et de fixation 10 de la sonde de détection 1, objet de l'invention, comporte un porte-sonde 7 se terminant par un porte-collimateur 5 et un dispositif de fixation 6 à un rond de gant 9.1 de boîte à gants 9.

La sonde de détection 1 est amovible dans le porte-sonde 7. Pour mettre en évidence des sources radioactives de niveaux très différents, il est nécessaire d'avoir à disposition une palette de sondes de détection 1 dont les détecteurs 2 ont des volumes différents.

Le porte-collimateur 5 est destiné à porter le collimateur 3. On verra sur la figure 2A que la sonde de détection 1, placée dans le porte-sonde 7, peut fonctionner en l'absence du collimateur, en champ ouvert. Dans cette configuration, le porte-collimateur 5 ne porte pas de collimateur 3. Le détecteur 2 de la sonde de détection 1 émerge du porte-collimateur 5.

Le porte-sonde 7 est préférentiellement une pièce tubulaire construite autour d'un axe principal. La sonde de détection 1 est destinée à être insérée dans le porte-sonde 7. Le porte-sonde 7 peut être réalisé en acier inoxydable. Il possède une première extrémité ouverte devant être fixée au porte-collimateur 5 et une seconde extrémité par laquelle les conducteurs électriques 1.1 issus de la sonde de détection 1 peuvent être rendus accessibles pour être reliés électriquement au système de traitement et d'affichage 11.

Le porte-collimateur 5 est une pièce tubulaire. Il est construit autour d'un axe principal et a une épaisseur plus grande que celle du porte-sonde 7. Ses deux extrémités sont ouvertes. Il est destiné à être enfilé autour de la sonde 1 tout comme le porte-sonde 7. Il est destiné à être fixé, par une extrémité, à une extrémité du porte-sonde 7 et par son autre extrémité à un collimateur 3. Il prolonge le porte-sonde 7. Le porte-collimateur 5 peut être réalisé en acier inoxydable comme le porte-sonde 7. Il doit avoir une tenue mécanique plus importante que celle du collimateur 3.

Le collimateur 3 a une fonction de blindage. Il peut être réalisé en cuivre ou en alliage de cuivre, le cuivre possédant un meilleur facteur d'atténuation que les aciers. Le collimateur 3 comporte une ouverture par laquelle le rayonnement ionisant peut atteindre le détecteur 2, lorsque ce dernier est placé dans le collimateur 3. Le reste du collimateur, c'est-à-dire son corps, entoure le détecteur et a une fonction de blindage vis-à-vis du rayonnement ionisant.

On prévoit de manière avantageuse, comme le montre la figure 2B, que le collimateur 3 soit amovible, c'est-à-dire aisément détachable du porte-collimateur 5. On peut alors disposer, pour une même sonde de détection 1, de plusieurs collimateurs 3 ayant des ouvertures de valeurs différentes et donc des angles solides de valeurs différentes. On peut également se passer de collimateur en laissant le porte-collimateur 5 libre. L'utilisation de collimateurs 3 interchangeables, permettant de bénéficier d'angles solides variables, est très utile pour adapter le dispositif de suivi de matière nucléaire aux dimensions de la boîte à gants, c'est-à-dire, d'une part, la hauteur entre la paillasse de la boîte à gants et l'axe passant par le centre du rond de gant, et d'autre part la profondeur de la paillasse mesurée le long de cet axe.

La figure 2A montre le porte-collimateur 5 et la sonde de détection 1 qui passe à travers, laissant apparaître le détecteur 2, le collimateur étant absent. La figure 2B montre la sonde 1, le porte-collimateur 5, un collimateur 3 monté de manière amovible sur le porte-collimateur 5 ainsi qu'une série d'autres collimateurs 3 avec des angles solides différents, destinés à être montés sur le porte-collimateur 5. La figure 2C montre en coupe longitudinale le long de l'axe XX', les différents éléments de la figure 2B.

Le collimateur 3 est une pièce tubulaire borgne. Il est construit autour d'un axe principal. Il est fermé à une de ses extrémités, son autre extrémité devant se fixer au porte-collimateur 5. L'extrémité fermée peut être en forme de calotte sphérique, plate ou autre. La calotte sphérique est avantageuse pour homogénéiser spatialement l'épaisseur de matière autour du détecteur 2.

Le collimateur 3 est destiné à loger le détecteur 2 de la sonde de détection 1. Le volume du logement intérieur au collimateur est choisi pour pouvoir loger des détecteurs de volume différents. Il comporte latéralement un trou traversant 3.1, de préférence tronconique, de manière à délimiter le champ d'observation du détecteur 2. L'angle solide du cône correspond à celui du collimateur 3.

Le trou traversant 3.1 est construit autour d'un axe qui est perpendiculaire à celui de l'axe principal du collimateur 3. Sur la figure 2C, ces axes sont visibles. Sur les figure 2B et 2C, on a représenté cinq collimateurs 3 différents ayant des angles solides respectivement de 10°, 30°, 50°, 70°, 90° degrés. La plage d'angles couverte va donc de 10° à 90° avec un pas de 20°. D'autres valeurs sont bien sûr envisageables.

Sur les figures 1A, 1B, la sonde de détection 1, le porte-collimateur 5, le collimateur 3 et le porte-sonde 7 sont agencés les uns par rapport aux autres de manière coaxiale.

Le collimateur 3 et le porte-collimateur 5 sont fixés l'un à l'autre par des moyens de fixation 8. Ces moyens de fixation 8 comportent d'une part un emmanchement cylindre-cylindre et d'autre part des moyens d'immobilisation. Le collimateur 3 et le porte-collimateur 5 sont montés l'un par rapport à l'autre grâce à l'emmanchement cylindre-cylindre. Pour cela, le collimateur 3 est muni d'une partie cylindrique femelle 3.1 devant pénétrer dans une partie cylindrique mâle 5.1 portée par le porte-collimateur 5. On pourrait bien sûr envisager que ce soit le porte-collimateur 5 qui soit muni de la partie cylindrique femelle et que le collimateur 3 soit muni de la partie cylindrique mâle. Ce montage permet de mettre en butée le collimateur contre le porte-collimateur.

Le porte-collimateur 5 et le collimateur 3 une fois emmanchés l'un dans l'autre sont immobilisés en translation et en rotation par les moyens d'immobilisation 8.1 tels qu'au moins un poussoir à billes destiné à passer à travers un trou traversant 3.2 radial de la partie cylindrique femelle 3.1, et à venir en butée contre une encoche 5.2 portée par la partie cylindrique mâle 5.1. Sur les figures, on a représenté deux poussoirs à billes 8.1 diamétralement opposés, ce qui permet d'améliorer la fiabilité du blocage en rotation entre le collimateur 3 et le porte-collimateur 5. On a représenté également, sur la partie cylindrique mâle 5.1 du porte-collimateur 5 une série d'encoches 5.2, régulièrement réparties, ce qui permet d'ajuster la position angulaire du trou traversant 3.1 du collimateur 3 par rapport au porte-collimateur 5. Sur la figure 2A, on a représenté 12 encoches 8.2. Ce nombre n'est pas limitatif. L'ajustement de la position angulaire de l'ouverture du collimateur 3 par rapport au porte-collimateur 5 permet de s'affranchir de sources irradiantes gamma parasites en les excluant de l'angle solide et donc du champ d'observation de la sonde de détection. Lorsque le dispositif mécanique de support 10 est prévu pour plusieurs sondes de détection 1, l'ajustement de la position angulaire de l'ouverture des collimateurs 3 permet d'orienter différemment le champ de vision de chaque sonde de détection 1 de manière à couvrir la plus grande surface possible de la paillasse de la boîte à gants 9 comme illustré sur la figure 3.

On prévoit également au niveau du porte-collimateur 5 des moyens 5.3 pour bloquer en translation et en rotation la sonde de détection 1. Ils ne sont visibles que sur les figures 2B et 2C.

Ces moyens de blocage 5.3 peuvent comporter une vis, pénétrant radialement dans un alésage du porte-collimateur 5 et dont une extrémité vient en butée contre la sonde de détection 1 lors du blocage.

Le dispositif mécanique de support et de fixation 10 comporte, en outre, un dispositif de fixation 6 à un rond de gant 9.1 de boîte à gants 9. Le gant 9.2 ou la manche restent en place lorsque l'on enfile le dispositif de suivi de matière nucléaire dans le rond de gant 9.1 de la boîte à gants 9. Dans ce contexte on conserve la dénomination « rond de gant » même s'il porte une manche.

Le dispositif de fixation 6 comporte une partie centrale 6.1 entourée d'une bride 6.2, devant venir se fixer au rond de gant 9.1 de la boîte 9 à gants. On se réfère aux figures 1A, 1B de nouveau ainsi qu'à la figure 3. Ce rond de gant 9.1 est bordé d'une bague 9.5 qui peut être munie d'ergots 9.3, généralement au nombre de trois. La bride 6.2, elle, est, sur ces figures, munie d'une fixation de type à baïonnette 6.3 appariée avec les ergots 9.3. Un ou plusieurs porte-sondes 7 traversent la partie centrale 6.1. Il y a un seul dispositif de fixation 6 pour plusieurs porte-sondes 7. La partie centrale 6.1 est représentée en forme de disque plein muni toutefois d'un ou plusieurs trous pour introduire dans chacun un des porte-sondes 7. Cette partie-centrale 6.1 est assimilée à un obturateur. Elle vient obturer le rond de gant 9.1. Des parties centrales ajourées seraient possibles, le gant assurant une étanchéité statique. La partie centrale 6.1 n'a qu'une fonction de support et de positionnement du ou de chaque porte-sonde 7.

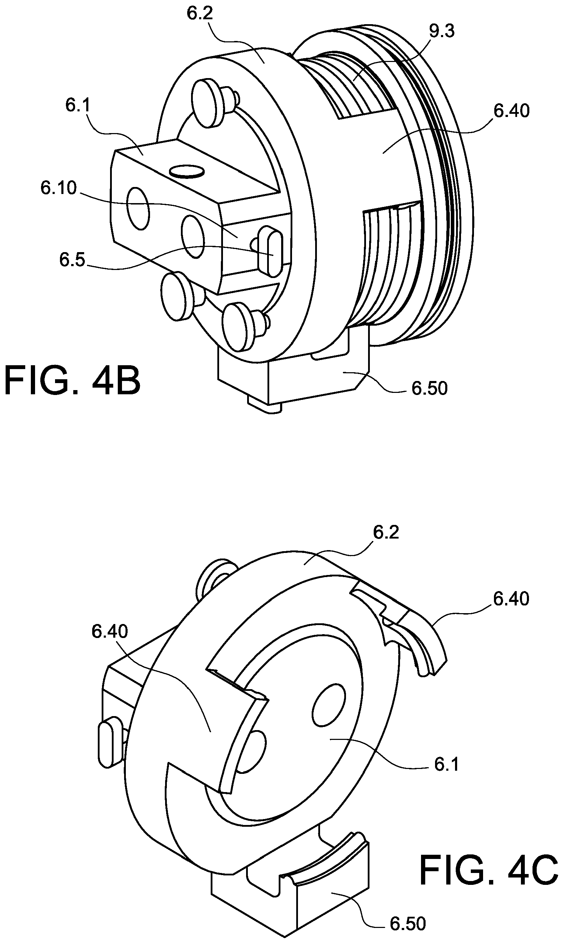

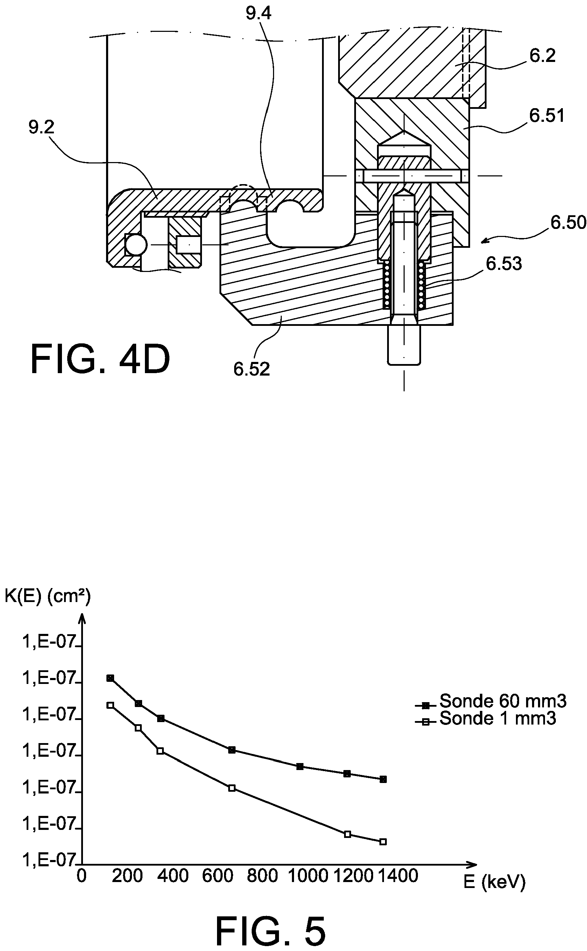

En variante illustrée sur les figures 4A1 et 4A2, le rond de gant 9.1 est bordé d'une bague 9.5 munie extérieurement d'une ou plusieurs gorges 9.41 ou d'un ou plusieurs bourrelets 9.42. Les gorges 9.41 sont en creux et les bourrelets 9.42 en saillie. La bride 6.2 est munie de griffes 6.40, 6.50 radiales qui viennent en appui à l'extérieur de la bague 9.2 dans au moins 9.42. On se réfère aux figures 4B, 4C, 4D. Parmi les griffes 6.40, 6.50, au moins une référencée 6.50 est réglable comme illustré sur la figure 4D, l'autre ou les autres griffes 6.40 sont fixes. La griffe réglable 6.50 est en deux parties, une partie fixe 6.51 solidaire de la bride 6.2 et une partie mobile 6.52 avec une extrémité recourbée destinée à prendre appui dans une gorge 9.41, en l'occurrence la deuxième, la plus proche de la boîte à gants pour que la fixation soit optimale. Si au lieu de gorges, la bague 9.5 est munie d'un ou plusieurs bourrelets 9.42 comme sur la figure 4A2, la partie mobile 6.52 prend appui sur un des bourrelets, par exemple le deuxième, le plus proche de la boîte à gants. Des moyens de serrage à vis 6.53 sont prévus pour maintenir la partie mobile 6.52 contre la partie fixe 6.51, une fois que l'extrémité recourbée de la partie mobile 6.52 est en place.

La partie centrale 6.1 est déplaçable en rotation par rapport à la bride 6.2, notamment une fois que la bride 6.2 est fixée et immobilisée en rotation dans le rond de gant 9.1 de la boîte à gants. Le détecteur est alors positionné dans la boîte à gants. On prévoit des moyens de blocage en rotation 6.4 de la partie centrale 6.1 par rapport à la bride 6.2. Il peut s'agir d'au moins une vis moletée 6.4 à visser dans la bride 6.2 et dont la tête vient immobiliser, lorsqu'elle est vissée, la partie centrale 6.1 par rapport à la bride 6.2. Il est préférable de prévoir plusieurs vis moletées réparties autour de la partie centrale 6.1. Une vis moletée a pour avantage de posséder au niveau de sa tête un épaulement important permettant d'avoir une surface de serrage importante.

Sur la figure on en a représenté deux diamétralement opposées. L'axe de vissage est sensiblement parallèle à l'axe XX'. On munit, de préférence, le dispositif de fixation 6 et plus particulièrement sa partie centrale 6.1 d'un niveau à bulle 6.5 de manière à pouvoir repérer l'orientation angulaire de la partie centrale 6.1, par rapport à l'horizontale et/ou la verticale.

Chaque porte-sonde 7 est mobile en translation et en rotation par rapport au dispositif de fixation 6 avant serrage. Il peut coulisser dans la partie centrale 6.1 du dispositif de fixation 6. On prévoit des moyens de blocage 6.5 en translation et en rotation de chacun des porte-sondes 7 par rapport au dispositif de fixation 6, ce qui permet d'ajuster en profondeur la position du détecteur dans la boîte à gants par rapport au rond de gant, une fois que le dispositif de fixation 6 est solidarisé à la boîte à gants. Ces moyens de blocage 6.4 peuvent être réalisés par exemple, pour chaque porte-sonde 7, par une vis à oreilles qui peut être aisément vissée et dévissée à la main. Cette vis à oreilles est vissée dans une protubérance 6.10 portée par la partie centrale 6.1 du dispositif de fixation 6. Son extrémité vient se ficher dans une rainure portée par le porte-sonde 7, ce qui conduit à l'immobilisation en rotation et en translation. La rainure n'est pas visible sur les figures. Ce type de moyens de blocage en rotation et en translation est classique en mécanique.

Chaque sonde de détection 1 est bien entendue destinée à être alimentée en haute et basse tension, de préférence de manière indépendante, cette alimentation n'est pas représentée pour ne pas surcharger les figures. Chaque sonde de détection 1 est destinée à être reliée à un système de traitement et d'affichage 11 d'un signal délivré par la sonde.

On choisit, de préférence, des détecteurs en CdZnTe ou en CdTe car ils présentent un rendement plus important à basse énergie qu'à haute énergie comme illustré sur la figure 5 tout en présentant une résolution satisfaisante. La résolution correspond, dans un spectre, à la largeur d'un pic à mi hauteur, elle doit être suffisante pour être lue. Par exemple pour l'américium 241, cette largeur est inférieure à 1 keV. De plus, la morphologie de ces détecteurs est suffisamment compacte, ce qui permet, lorsqu'ils sont logés dans un collimateur, de les introduire, seuls ou à plusieurs, dans un rond de gant standard d'une boîte à gants.

La figure 5 a été obtenue avec des détecteurs en CdZnTe dont le volume est de 1 mm³ et de 60 mm³. On voit que l'échelle des abscisses couvre la gamme 0 à 1400 keV. On rappelle, de plus, que les actinides (radioéléments dont le nombre de masse est supérieur à celui de l'actinium soit 227) ont des raies gamma d'énergie dont les pics sont compris entre 0 et 300 keV. Par exemple, les deux raies caractéristiques du plutonium ou de ses descendants ont une énergie de 59,54 keV pour l'américium 241 et de 208 keV pour l'uranium 237.

Le rendement intrinsèque K(E) en cm² à l'énergie E d'un détecteur donné est déterminé, de manière expérimentale, au moyen de sources étalons ponctuelles dont on connaît l'activité, disposées à une distance donnée du détecteur. Pour chaque pic significatif du spectre obtenu avec une source étalon, on calcule le taux de comptage et on le rapporte au débit de fluence étalon au centre du détecteur. Le rendement intrinsèque du détecteur répond à la formule K(E) = S(E)/Tc x Φ(E) avec S (E) surface nette du pic d'énergie à l'énergie E, Tc est le temps d'acquisition du spectre exprimé en seconde, Φ(E) est le débit de fluence (gamma/cm²/s) au centre du détecteur.

Le traitement du spectre se fait de manière classique.

Il permet d'informer un opérateur de l'évolution de la quantité de matière nucléaire dans la boîte à gants de deux façons. Pour chaque raie présente dans le spectre, on dispose de l'énergie correspondant au sommet du pic et de la surface nette du pic.

L'une des façons est l'obtention du facteur de rétention ou de décontamination FD et l'autre est une lecture directe du spectre conduisant à la détermination de l'activité de la matière nucléaire inscrite dans l'angle solide du collimateur. Cet angle peut varier en taille et en position de manière à couvrir toute la boîte à gants

Pour estimer le facteur de rétention ou de décontamination FD pour un radioélément donné, on détermine la surface nette du pic à l'énergie significative Ei de ce radioélément à deux instants donnés, t0 et t1 avec t1 postérieur à t0. On suppose que la masse de matière nucléaire a évolué entre ces deux instants. Ces surfaces corrigées du temps (taux de comptage) sont appelées N_{0Ei} et N_{1Ei}. Le facteur de rétention ou de décontamination FD correspondant à l'énergie Ei entre l'instant t0 et l'instant t1 est le rapport N_{0Ei}/N_{1Ei}.

On peut ainsi identifier un ou plusieurs radioéléments présents dans la matière nucléaire suivie, cette matière nucléaire se trouvant dans la boîte à gants.

## Revendications

1. Dispositif mécanique de support et de fixation d'au moins une sonde de détection de rayonnement ionisant (1) comportant, pour chaque sonde de détection (1), un porte-sonde (7) se terminant par un porte-collimateur (5) apte à supporter un collimateur (3) destiné à délimiter un champ d'observation de la sonde de détection (1), un dispositif de fixation (6) destiné à être fixé sur un rond de gant (9.1) de boîte à gants (9), le ou chaque porte-sonde (7) coopérant avec ledit dispositif de fixation (6) ainsi qu'un collimateur (3) et des moyens de fixation (8) du collimateur (3) au porte-collimateur (5) **caractérisé en ce que** les moyens de fixation du collimateur au porte-collimateur sont de type emmanchement cylindre-cylindre avec au moins un poussoir à billes (8.1) destiné à venir en butée contre une encoche (5.2) portée soit par le porte-collimateur (5), soit par le collimateur (3) pour une immobilisation en rotation et en translation du collimateur (3) par rapport au porte-collimateur (5), le collimateur (3) étant amovible de manière à pouvoir ajuster un champ d'observation de la sonde de détection (1).

2. Dispositif mécanique selon la revendication 1, dans lequel le porte-collimateur (5) est pourvu de moyens (5.3) de blocage de la sonde de détection (1) en translation et en rotation par rapport au porte-collimateur (5).

3. Dispositif mécanique selon l'une des revendications 1 ou 2, dans lequel le dispositif de fixation (6) comporte une partie centrale (6.1) au travers de laquelle passe le porte-sonde (7), cette partie centrale (6.1) étant bordée par une bride (6.2) pourvue de moyens de fixation (6.3) devant coopérer avec des moyens de fixation conjugués (9.3, 9.41, 9.42) portés par le rond de gant (9.1) de la boîte à gants, ces moyens de fixation (6.3) étant de type à baïonnette ou à griffes.

4. Dispositif mécanique selon l'une des revendications 1 à 3, dans lequel le dispositif de fixation (6) comporte des moyens de blocage en translation et en rotation (6.5) du porte-sonde (7).

5. Dispositif mécanique selon l'une des revendications 1 à 4, dans lequel le dispositif de fixation (6) comporte des moyens de blocage en rotation (6.4) de la partie centrale (6.1) par rapport à la bride (6.2).

6. Dispositif mécanique selon l'une des revendications 1 à 5, dans lequel le dispositif de fixation (6) est équipé d'un niveau à bulle (5.4, 6.5).

7. Dispositif de suivi de matière nucléaire placée dans une boîte à gants (9), **caractérisé en ce qu'**il comporte un dispositif mécanique de support et de fixation selon l'une des revendications précédentes, au moins une sonde de détection de rayonnement ionisant (1) placée dans le porte-sonde (7), cette sonde de détection de rayonnement ionisant (1) ayant un détecteur (2) sensible au rayonnement ionisant qui émerge du porte-collimateur (5), et un système de traitement et d'affichage (11) d'un signal délivré par la sonde de détection de rayonnement ionisant (1).

8. Dispositif de suivi de matière nucléaire selon la revendication 7, comportant un collimateur fixé au porte-collimateur (5), dans lequel le détecteur (2) est logé dans le collimateur (3)

9. Dispositif de suivi de matière nucléaire selon l'une des revendications 7 ou 8, dans lequel la sonde de détection de rayonnement ionisant (1) est une sonde de spectrométrie X et/ou gamma.

10. Dispositif de suivi de matière nucléaire selon l'une des revendications 7 à 9, dans lequel le détecteur (2) est en CdTe ou en CdZnTn.

11. Boîte à gants (9) **caractérisée en ce qu'**elle est équipée d'un dispositif de suivi de matière nucléaire selon l'une des revendications 7 à 10.

12. Utilisation d'un dispositif de suivi de matière nucléaire selon l'une des revendications 7 à 10, pour identifier un ou plusieurs radioéléments présent dans la matière nucléaire suivie.

13. Utilisation du dispositif de suivi de matière nucléaire selon l'une des revendications 7 à 10, pour déterminer l'activité de la matière nucléaire suivie.

14. Utilisation du dispositif de suivi de matière nucléaire selon l'une des revendications 7 à 10, pour estimer l'évolution du facteur de rétention ou de décontamination de la matière nucléaire suivie.

## Patentansprüche

1. Mechanische Vorrichtung zum Stützen und Befestigen wenigstens einer Erfassungssonde für ionisierende Strahlung (1), umfassend, für jede Erfassungssonde (1), einen Sondenträger (7), der an einem Kollimatorträger (5) endet, welcher dazu ausgelegt ist, einen Kollimator (3) zu stützen, der dazu ausgelegt ist, ein Sichtfeld der Erfassungssonde (1) zu begrenzen, eine Befestigungsvorrichtung (6), die dazu ausgelegt ist, an einem Handschuhring (9.1) einer Handschuhbox (9) befestigt zu sein, wobei der oder die Sondenträger (7) mit der Befestigungsvorrichtung (6) sowie einem Kollimator (3) und Mitteln (8) zur Befestigung des Kollimators (3) am Kollimatorträger (5) zusammenwirkt/zusammenwirken, **dadurch gekennzeichnet, dass** die Mittel zur Befestigung des Kollimators am Kollimatorträger vom Typ Zylinder-Zylinder-Einpassung sind, mit wenigstens einem Kugeldrücker (8.1), der dazu ausgelegt ist, in Anlage gegen eine Kerbe (5.2) zu gelangen, die entweder vom Kollimatorträger (5) oder vom Kollimator (3) getragen wird, zum Zweck einer Rotations- und Translations-Immobilisierung des Kollimators (3) bezüglich des Kollimatorträgers (5), wobei der Kollimator (3) derart abnehmbar ist, dass ein Sichtfeld der Erfassungssonde (1) eingestellt werden kann.

2. Mechanische Vorrichtung nach Anspruch 1, bei der der Kollimatorträger (5) mit Mitteln (5.3) zur Translations- und Rotationsblockade der Erfassungssonde (1) bezüglich des Kollimatorträgers (5) ausgestattet ist.

3. Mechanische Vorrichtung nach einem der Ansprüche 1 oder 2, bei der die Befestigungsvorrichtung (6) einen Zentralbereich (6.1) umfasst, durch den hindurch der Sondenträger (7) verläuft, wobei dieser Zentralbereich (6.1) durch einen Flansch (6.2) eingefasst ist, der mit Befestigungsmitteln (6.3) zum Zusammenwirken mit zugeordneten Befestigungsmitteln (9.3, 9.41, 9.42) ausgestattet ist, welche von dem Handschuhring (9.1) der Handschuhbox getragen werden, wobei diese Befestigungsmittel (6.3) vom Bajonette- oder Krallentyp sind.

4. Mechanische Vorrichtung nach einem der Ansprüche 1 bis 3, bei der die Befestigungsvorrichtung (6) Mittel zur Translations- und Rotationsblockade (6.5) des Sondenträgers (7) umfasst.

5. Mechanische Vorrichtung nach einem der Ansprüche 1 bis 4, bei der die Befestigungsvorrichtung (6) Mittel zur Rotationsblockade (6.4) des Zentralbereichs (6.1) bezüglich des Flansches (6.2) umfasst.

6. Mechanische Vorrichtung nach einem der Ansprüche 1 bis 5, bei der die Befestigungsvorrichtung (6) mit einer Wasserwaage (5.4, 6.5) ausgestattet ist.

7. Vorrichtung zur Verfolgung von Nuklearmaterial, das in einer Handschuhbox (9) platziert ist, **dadurch gekennzeichnet, dass** sie eine mechanische Vorrichtung zum Stützen und Befestigen nach einem der vorhergehenden Ansprüche umfasst, wenigstens eine Sonde zur Erfassung ionisierender Strahlung (1), die in dem Sondenträger (7) platziert ist, wobei diese Sonde zur Erfassung ionisierender Strahlung (1) einen Detektor (2) hat, der auf ionisierende Strahlung empfindlich ist, die aus dem Kollimatorträger (5) austritt, sowie ein System zur Bearbeitung und Anzeige (11) eines Signals, das von der Sonde zur Erfassung ionisierender Strahlung (1) geliefert wird.

8. Vorrichtung zur Verfolgung von Nuklearmaterial nach Anspruch 7, umfassend einen Kollimator, der an dem Kollimatorträger (5) befestigt ist, wobei der Detektor (2) in dem Kollimator (3) aufgenommen ist.

9. Vorrichtung zur Verfolgung von Nuklearmaterial nach einem der Ansprüche 7 oder 8, wobei die Sonde zur Erfassung ionisierender Strahlung (1) eine Röntgen- und/oder Gamma-Spektrometriesonde ist.

10. Vorrichtung zur Verfolgung von Nuklearmaterial nach einem der Ansprüche 7 bis 9, wobei der Detektor (2) aus CdTe oder aus CdZnTn ist.

11. Handschuhbox (9), **dadurch gekennzeichnet, dass** sie mit einer Vorrichtung zur Verfolgung von Nuklearmaterial nach einem der Ansprüche 7 bis 10 ausgestattet ist.

12. Verwendung einer Vorrichtung zur Verfolgung von Nuklearmaterial nach einem der Ansprüche 7 bis 10 zum Identifizieren eines oder mehrerer Radioelemente, die in dem verfolgten Nuklearmaterial vorhanden sind.

13. Verwendung der Vorrichtung zur Verfolgung von Nuklearmaterial nach einem der Ansprüche 7 bis 10 zur Bestimmung der Aktivität des verfolgten Nuklearmaterials.

14. Verwendung der Vorrichtung zur Verfolgung von Nuklearmaterial nach einem der Ansprüche 7 bis 10 zur Abschätzung der Entwicklung des Rückhalte- oder des Dekontaminationsfaktors des verfolgten Nuklearmaterials.

## Claims

1. A mechanical device for supporting and attaching at least one probe for detecting ionising radiation (1) including, for each detection probe (1), a probe-holder (7) ending in a collimator-holder (5) able to support a collimator (3) intended to delimit a field of observation of the detection probe (1), an attachment device (6) intended to be attached to a glove port (9.1) of a glove box (9), where the probe-holder, or each probe-holder, (7) cooperates with the said attachment device (6) and also a collimator (3) and attachment means (8) for attaching the collimator (3) to the collimator-holder (5) **characterized in that** the means for attaching the collimator is of the cylinder-cylinder fitting type, with at least one ball plunger (8.1) intended to come to a stop against a notch (5.2) held either by the collimator-holder (5), or by the collimator (3) to prevent the collimator (3) from rotating or sliding relative to the collimator-holder (5), where the collimator (3) can be detached so as to be able to adjust a field of observation of the detection probe (1).

2. A mechanical device according to claim 1, in which the collimator-holder (5) is provided with locking means (5.3) for preventing the detection probe (1) from sliding or rotating relative to the collimator-holder (5).

3. A mechanical device according to one of claims 1 or 2, in which the attachment device (6) includes a central portion (6.1), through which the probe-holder (7) passes, where this central portion (6.1) is edged with a flange (6.2) fitted with attachment means (6.3) intended to cooperate with combined attachment means (9.3, 9.41, 9.42) held by the glove port (9.1) of the glove box, where these attachment means (6.3) are of the bayonet or claw type.

4. A mechanical device according to claim 1, in which the attachment device (6) includes locking means (6.5) to prevent the probe-holder (7) from sliding or rotating.

5. A mechanical device according to claim 1, in which the attachment device (6) includes locking means (6.4) to prevent the central portion (6.1) from sliding or rotating relative to the flange (6.2).

6. A mechanical device according to claim 1, in which the attachment device (6) is fitted with a bubble level (5.4, 6.5).

7. A nuclear material monitoring device placed in a glove box (9), **characterised in that** it includes a mechanical support and attachment device according to claim 1, at least one ionising radiation detection probe (1) placed in the probe-holder (7), where this ionising radiation detection probe (1) has a detector (2) which is sensitive to the ionising radiation which is emitted from the collimator-holder (5), and a system (11) for processing and displaying a signal delivered by the ionising radiation detection probe (1).

8. A nuclear material monitoring device according to claim 7, in which the detector (2) is housed in the collimator (3), when the collimator is attached to the collimator-holder (5).

9. A nuclear material monitoring device according to claim 7, in which the ionising radiation detection probe (1) is an X and/or gamma spectrometry probe.

10. A nuclear material monitoring device according to claim 7, in which the detector (2) is made of CdTe or CdZnTn.

11. A glove box (9) **characterised in that** it is fitted with a nuclear material monitoring device according to claim 7.

12. Use of a nuclear material monitoring device according to claim 7, to identify one or more radioelements present in the monitored nuclear material.

13. Use of the nuclear material monitoring device according to claim 7, to determine the activity of the monitored nuclear material.

14. Use of the nuclear material monitoring device according to claim 7, to estimate the change in the retention or decontamination factor of the monitored nuclear material.
